# EUROPEAN PATENT APPLICATION

(11) **EP 4 597 700 A1**
(43) Date of publication of application: **06.08.2025**
(21) Application number: 23871453.9
(22) Date of filing: 02.08.2023
(51) Int. Cl.: H01M 50/204, H01M 10/613, H01M 50/213, H01M 50/298, H01M 50/507, H01M 50/509

(54) **BATTERY SYSTEM**

(30) Priority: 27.09.2022 JP 2022154145
(71) Applicant: Panasonic Energy Co., Ltd., Osaka 570-8511 (JP)
(72) Inventor: KURIHARA, Hidemi, Kadoma-shi, Osaka 571-0057 (JP)
(74) Representative: Novagraaf International SA
(86) International application number: PCT/JP2023/028288
(87) International publication number: WO 2024/070211

(57) **Abstract**

The present invention suppresses a temperature rise of a battery cell due to a bus bar plate connected to first and second lead plates. **In** battery system 1 in which a plurality of battery cells 4A included in battery block 4 are connected in series as well as in parallel by connecting the end-face electrodes of battery cells 4A with first lead plate 7A and second lead plate 7B that are connected by bus bar plates 3, a temperature rise of a specific battery cell 4A caused by bus bar plates 3 is suppressed by ensuring cooling gap 5 between bus bar plates 3 and battery block 4, and enabling the air in cooling gap 5 to rise quickly when the temperature of bus bar plate 3 rises due to the Joule heating of the load current.

## Description

### TECHNICAL FIELD

The present invention relates to a battery system in which a plurality of battery cells are electrically connected using a lead plate and a bus bar plate.

### BACKGROUND ART

In battery systems, the maximum current to be supplied to a load can be increased by connecting a plurality of battery cells in parallel, and the voltage to be supplied to the load can be increased by connecting battery cells in series. Used as a structure of such a battery system is a structure that connects a plurality of battery cells in parallel by connecting lead plates to the electrodes provided on the upper and lower ends of the battery cells, and that connects the plurality of battery cells in series by connecting the upper and lower lead plates using bus bar plates. (Patent Literatures 1, 2)

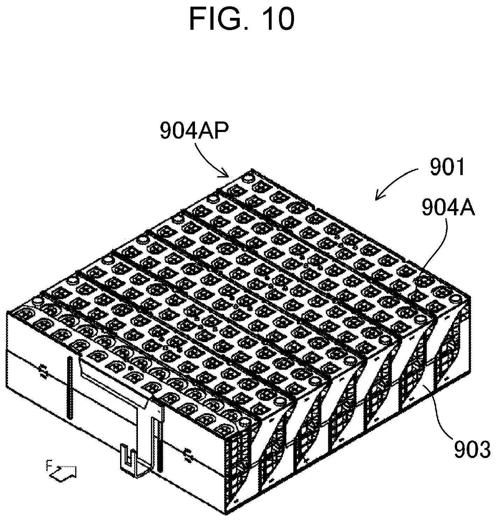

In the battery system described above, as illustrated in Fig. 10, a battery block having a cuboid shape is provided with a plurality of rows of lead plates that are disposed in parallel on the top surface and the bottom surface of the battery block, and a plurality of rows of bus bar plates 903 each electrically connecting an upper lead plate and a lower lead plate are disposed on the side surfaces of the battery block. Each of the plurality of rows of the lead plates disposed on the top surface of the battery block connects the upper face electrodes of battery cells 904A, and each of the plurality of lead plates disposed on the bottom surface of the battery block connects the bottom face electrodes of battery cells 904A. In this manner, adjacent battery cells 904A are connected in parallel, and parallel block 904Ap of batteries is formed thereby. Each bus bar plates 903 that are arranged in a plurality of rows are disposed vertically on side surfaces of the battery block, and connect parallel blocks 904Ap of batteries in series. Bus bar plates 903 can connect parallel blocks 904Ap in series by having the upper ends and the lower ends thereof electrically connected to the upper lead plates and the lower lead plates, respectively. In battery system 901, the maximum current permitted to output to the load can be adjusted using the number of batteries in parallel block 904Ap, and the output voltage can be adjusted using the number of parallel blocks 904Ap to be connected in series by bus bar plates 903. In this manner, the maximum current to be output to the load and the output voltage can be optimized.

### Citation List

### Patent Literatures

PTL 1: Japanese Patent No. 7069312
PTL 2: Japanese Translation of PCT International Application Publication No. 2021-503157

### SUMMARY OF THE INVENTION

### Technical Problem

In battery system 901 illustrated in Fig. 10, although the maximum current to be output to the load can be increased by increasing the number of battery cells 904A connected in parallel in parallel block 904Ap, the sum of the currents flowing through respective battery cells 904A in parallel blocks 904Ap flows into bus bar plates 903. **In** other words, the total current of parallel blocks 904Ap flows through bus bar plates 903, and a large amount of thermal energy is generated by the Joule heating. The bus bar plates 903 raised in temperature by the Joule heating therefore gives an adverse effect of heating and rising the temperature of battery cells 904A disposed nearby.

Furthermore, to add more trouble to the battery system described above, in usage environments in which the bus bar plates are heated, the battery cells are also heated, and the heated bus bar plates promote heating of the battery cells having been already heated, adversely. Because an increase in the output current in the battery system translates into an increase in currents in both of the battery cells and the bus bar plates, a larger amount of thermal energy is generated by the Joule heating resultant of these currents. In particular, a larger thermal energy is generated in the bus bar plates where the total current of the battery cells flows, and causes a further increase in the temperature of the battery cells having already become heated. Therefore, it is particularly important, in the battery system described above, to minimize the thermal energy of the bus bar plates that lead to a temperature rise of the battery cells. Furthermore, when the battery cells disposed near and facing the bus bar plates and having been heated by their own load currents become heated further by the heated bus bar plates, the speed of the temperature rise accelerates, and the temperature of such battery cells becomes extremely high.

Moreover, it is also of importance, for a battery system including a plurality of battery cells, to suppress a temperature rise in a specific one of the battery cells, and to minimize a temperature difference among the entire battery cells. This is because the temperature rise in one specific battery cell affects the electrical characteristics and the lifetime of the entire battery system. For example, if a specific battery cell deteriorates due to a temperature rise, the battery cell affects the entire battery system adversely, e.g., shortens the lifetime of the entire battery system, or imposes a limit on the maximum output current from the battery system. In order to suppress a temperature rise in a specific battery cell, it is also extremely important to provide a capability for suppressing a temperature rise of a battery cell that is more likely to become heated while the power is being supplied to the load, and to minimize a temperature difference among the battery cells. Because the bus bar plates generate a high thermal energy, due to the Joule heating resultant of the total current of the parallel blocks of batteries passed therethrough, it is extremely important for a battery system to have a capability for suppressing heating of the battery cells, caused by the bus bar plates.

The present invention has been developed to address the challenges described above, and an important object of the present invention is to provide a battery system capable of suppressing heating of a battery cell by a bus bar plate, and suppressing an adverse effect of a temperature difference among the battery cells.

### Solution to Problem

A battery system includes: a battery block including a plurality of battery cells; a plurality of first lead plates disposed on a top surface of the battery block and connected to end-face electrodes of the battery cells; a plurality of second lead plates disposed on a bottom surface of the battery block and connected to end-face electrodes of the battery cells; and a plurality of bus bar plates having upper ends and lower ends electrically connected to the first lead plates and the second lead plates, respectively, and disposed vertically on a side surface of the battery block, and in which the plurality of bus bar plates and the battery block form a cooling gap being vertically and ventilating air, between the plurality of bus bar plates and the battery block.

### Advantageous Effects of Invention

With the battery system described above, it is possible to suppress heating of a battery cell by a bus bar plate, and to prevent an adverse effect of a temperature difference among the battery cells.

### BRIEF DESCRIPTION OF THE DRAWINGS

Fig. 1 is an exploded perspective view illustrating a battery system and an outer covering case according to an exemplary embodiment of the present invention.
Fig. 2 is a perspective view of the battery system illustrated in Fig. 1.
Fig. 3 is a perspective view illustrating the battery system illustrated in Fig. 2 viewed from the opposite side.
Fig. 4 is a perspective view of the battery system illustrated in Fig. 1, as viewed from below.
Fig. 5 is an enlarged perspective view of the battery system with bus bar plates separated from a battery block.
Fig. 6 is an enlarged vertical cross-sectional view illustrating a part where a lead plate and a bus bar plate are connected, in the battery system illustrated in Fig. 1.
Fig. 7 is an enlarged horizontal cross-sectional view of an upper part of the battery system.
Fig. 8 is an enlarged horizontal cross-sectional view of a central part of the battery system.
Fig. 9 is a circuit diagram of the battery system.
Fig. 10 is a perspective view of a conventional battery system.

### DESCRIPTION OF EMBODIMENT

The present invention will now be described in detail with reference to drawings. In the following description, terms that indicate specific directions and positions (for example, "upper", "lower" and other terms including those terms) are used as necessary. However, these terms are used to facilitate understanding of the invention with reference to the drawings, and hence, the technical scope of the present invention is not limited by the meanings of these terms. Furthermore, parts denoted by the same reference marks in a plurality of drawings indicate the same or equivalent parts or members. Moreover, exemplary embodiments described below illustrate specific examples of the technical idea of the present invention, and therefore, the present invention is not limited to the exemplary embodiments described below. In addition, unless otherwise specified, dimensions, materials, shapes, relative arrangements, and the like of the components described below are not intended to limit the scope of the present invention, but are intended to be illustrative in nature. Furthermore, the contents described in one exemplary embodiment or example are also applicable to other exemplary embodiments and examples. Furthermore, sizes, positional relationships, and the like of the members in each drawing are sometimes exaggerated for the purpose of facilitating the understanding of the description.

A battery system according to an exemplary embodiment includes: a battery block including a plurality of battery cells; a plurality of first lead plates disposed on a top surface of the battery block and connected to electrodes of the battery cells that are adjacent; a plurality of second lead plates disposed on a bottom surface of the battery block and connected to electrodes of the battery cells that are adjacent; and a plurality of bus bar plates disposed vertically on a side surface of the battery block, and having upper ends and lower ends electrically connected to the first lead plates and the second lead plates, respectively, in which the plurality of bus bar plates and the battery block form a cooling gap being vertically and ventilating air, between the plurality of bus bar plates and the battery block.

In a battery system including a plurality of battery cells, the plurality of battery cells are connected in series as well as in parallel, in order to set the output to an optimum voltage and maximum current for an application. Battery systems can connect battery cells in parallel by disposing a first lead plate and a second lead plate on the top surface and the bottom surface of a battery block, respectively, and connecting the first lead plate and the second lead plate to the upper end-face electrodes and the lower end-face electrodes of the battery cells, respectively. The battery cells can be connected in series by disposing a bus bar plate on a side surface of the battery block, and connecting the bus bar plate to the first lead plate and to the second lead plate. Such a battery system can be set with an output voltage and current that are optimum for the application, by connecting the plurality of battery cells in series and in parallel, using the first and the second lead plate and the bus bar plate.

In a battery system connecting a plurality of battery cells in series as well as in parallel, it is also possible to connect the plurality of battery cells in series as well as in parallel only using the lead plates that are disposed on the top and the bottom surfaces of the battery block, without providing any bus bar plate. This is because the battery cells can be connected in series as well as in parallel using the lead plates disposed on the top and the bottom surfaces of the battery block. However, in this battery system, because each of the lead plate disposed on the top surface and the lead plate disposed on the bottom surface of the battery block are to be connected to the positive electrodes and the negative electrodes of the battery cells, it is necessary to dispose the positive electrodes and the negative electrodes of the battery cells on each of the top surface and the bottom surface of the battery block. Because a battery cell has an opening for exhaust valves on the side of one end-face electrode, e.g., on the side of the positive electrode, in such a battery system, highly heated high-pressure exhaust gas is ejected from the exhaust valves on the top and the bottom sides of the battery block. The exhaust gas triggers various thermal faults, such as thermal runaway of other battery cells, in the battery system, or becomes causes of thermal faults in the electronic components such as a circuit board. In a battery system in which the exhaust gas is ejected to both of the top surface and the bottom surface of a battery block, because both of the top surface and the bottom surface of the battery block need to be provided with exhaust ducts for guiding the exhaust gas, there are disadvantages such as complication of the internal structure of the case, and an increased outer size.

With the battery system in which the bus bar plate is disposed on the side surface of the battery block, and the battery cells are connected in series using the bus bar plate, it is possible to address the challenge described above, but such a battery system has a problem that the temperature of a specific battery cell in the battery block rises and the temperature balance of the battery cells deteriorates. In battery systems, the temperature balance of the battery cells is a very important characteristic. This is because an increase in the temperature of the battery cells causes a deterioration in the electrical characteristics. In a battery system with a poor temperature balance, the electrical characteristics of a specific battery cell deteriorates, and the battery cell becomes a cause of a reduction in the lifetime of the entire battery system. In the battery system in which the bus bar plate is disposed on the side surface of the battery block, both the bus bar plate and the battery cells generate heat by the Joule heating during the time of an increased load current. Therefore, there is a problem that the battery cells having been already heated are further heated by the heated bus bar plates, and such a temperature rise of the battery cells accelerates the temperature rise of a specific battery cell.

In the battery system according to Patent Literature 1, in order to prevent the adverse effect described above, the width of the bus bar plate is narrowed at the center so as to ensure a gap between the bus bar plate and another bus bar plate adjacent thereto. The bus bar plate therefore has a smaller area facing the battery cells. In this manner, a temperature rise of the battery cells caused by the bus bar plates can be suppressed. However, because the electric resistance of the bus bar plate increases as the lateral width of the bus bar plate is reduced, the thermal energy generated by the Joule heating, which increases proportionally to the electric resistance, also increases. Therefore, the temperature of the bus bar plate rises by a larger degree, and the battery cells become heated further, adversely.

As described above, although the battery system including the bus bar plate disposed on the side surface of the battery block has an advantage where the exhaust gas can be limited to one of the top surface and the bottom surface of the battery block, there is a problem that the bus bar plate promotes a rise of the temperature of a specific battery cell positioned facing the bus bar plate, and causes a deterioration in the electrical characteristics of the specific battery cell. In the manner described above, although the structure in which the bus bar plate for connecting the battery cells in series is disposed on the side surface of the battery block is favorable from the viewpoint of addressing the thermal failure caused by exhaust gas, such a structure affects the lifetime of the entire battery system, and deteriorates the temperature balance of the battery cells. Therefore, such a structure becomes an inhibiting factor in solving the problems caused by the heat.

In a condition where the load current of the battery system increases and causes the temperature of the battery cells to rise, if the bus bar plates, which themselves become heated, are disposed in a manner facing the battery cells, such positioning becomes a cause of a deterioration in the temperature balance and a thermal failure of the battery system. The battery system according to the exemplary embodiment of the present invention exhibits an excellent characteristic in suppressing the temperature rise of the battery cells. This characteristic is achieved by disposing the bus bar plates, which themselves become heated, on the side surface of the battery block, while ensuring a cooling gap that exerts a higher heat insulation effect when the temperature of the cooling gap itself becomes higher, between the bus bar plates and the side surface of the battery block.

In the battery system according to this exemplary embodiment, the cooling gap is ensured between the bus bar plates and the battery block, but this cooling gap is not configured to insulate the heat merely by ensuring an air layer between the bus bar plates and the battery cells. In an environment where the temperatures of both the bus bar plates and the battery cells become high, that is, in the temperature environment where there is a demand for suppressing a raise in the temperature of the battery cells, with the chimney effect of the cooling gap, the heated bus bar plates accelerate the speed at which the internal air rises. In this manner, the internal air in the cooling gap is ventilated effectively, and the cooling effect is improved. That is, as the temperatures of the bus bar plates and the battery cells become increased, the heat insulation effect of the cooling gap is improved further by the chimney effect of the cooling gap. With the improved heat-insulation effect of the cooling gap, an ideal characteristic for suppressing a temperature rise of the battery cells is achieved. Therefore, the battery system described above prevents the adverse effect of the bus bar plates being disposed on the side surfaces of the battery block, in deteriorating the temperature balance, as well as ensures the advantage for connecting the battery cells in series by connecting the first and the second lead plates with the bus bar plates. The battery system thus provides excellent actions and effects in, for example, suppressing a deterioration in the electrical characteristics and a reduction in the lifetime of the entire battery system.

In a battery block included in a battery system according to another exemplary embodiment of the present invention, it is possible to configure a plurality of battery cells as a plurality of parallel blocks by connecting the battery cells in parallel using first lead plates and second lead plates, and to connect the parallel blocks in series using bus bar plates.

In the battery system described above, because the total current from the plurality of battery cells connected in parallel by the first lead plate and the second lead plate flows through the bus bar plate, the current flowing through the bus bar plate becomes increased. Because a larger amount of thermal energy is generated due to the Joule heating of the current, the temperature of the bus bar plate rises further. The more the temperature of the bus bar plate rises, the more the air on the inner surface of the bus bar plate becomes heated, and the specific gravity of the air becomes reduced. In this manner, the air is enabled to rise smoothly. The air rapidly rising along the inner surface of the bus bar plate also causes the entire internal air inside the cooling gap to rise. The risen internal air is exhausted to the outside the cooling gap from above, and the outside unheated air comes into the cooling gap from below. This air flow improves the heat insulation effect of the cooling gap. The cooling gap with the improved heat insulation effect suppresses a temperature rise of the battery cells with the bus bar plates disposed facing and positioned nearby. Therefore, the battery system described above can effectively suppress a temperature rise of the battery cells caused by the bus bar plate, even in a condition in which the temperature of the bus bar plate rises, with the total current of the plurality of battery cells flowing therethrough. In particular, the battery system described above has an advantage in that a rise in the temperature of the battery cells caused by the heated bus bar plates can be suppressed in a condition where the temperature rise of the battery cells is prominent, that is, in a condition where the bus bar plates generate a greater thermal energy, by enabling the cooling gap to exert the heat insulation effect more effectively. In battery systems, it is particularly important to minimize a temperature rise of the battery cells in the usage environment where the temperature of the battery cells rises as a result of an increase in the load current. Therefore, the above-described advantage in suppressing a temperature rise of the battery cells in the usage environment where the load current is high is extremely important for battery systems.

In a battery block of a battery system according to another exemplary embodiment of the present invention, a battery holder may be used to dispose the battery cells at fixed positions, and a cooling gap may be ensured between the battery holder and the bus bar plates. This battery system has a two-layer heat insulating structure including the cooling gap and the battery holder, and therefore, is capable of suppressing a temperature rise of the battery cells caused by the heated bus bar plates more effectively. In the battery system described above, the surface of the battery holder facing the bus bar plates becomes heated by the radiant heat of the heated bus bar plates with the cooling gap ensured therebetween. Therefore, not only the radiant heat of the bus bar plates is blocked by the battery holder, but also the internal air inside the cooling gap is forced to rise by the heated bus bar plates, so that an excellent heat insulation effect is achieved. With the synergistic effect of the cooling gap with a better heat insulation effect and the radiant-heat blocking effect of the battery holder, a rise in the temperature of the battery cells can be suppressed more effectively.

In a battery system according to another exemplary embodiment of the present invention, a plurality of bus bar plates are arranged in parallel with each other on the same plane; an insulating gap is ensured between the bus bar plates that are adjacent to each other; and an insulating linear projection integrated with the battery holder is disposed inside the insulating gap, in which the insulating linear projection is enabled to partition the cooling gap into a plurality of rows of cooling ducts extending in a vertical direction.

The battery system described above has an advantage that, with the chimney effect of the cooling ducts partitioning the cooling gap and extending vertically, a temperature rise of the battery cells can be suppressed efficiently by the air rising along the cooling ducts. The chimney effect is an effect that, when the air inside a space extending vertically, such as a chimney, becomes heated, the specific gravity of the air drops so that the air becomes lighter, and that the light air is allowed to rise more smoothly. With such a chimney effect, the air inside a vertical space such as a chimney rises quickly. In particular, because the chimney effect enables the internal air to rise quickly in a limited space that is not too spacious, by providing a small cooling gap between the bus bar plates and the battery block, the internal air is enabled to rise more quickly. The capability for cooling the battery cells efficiently by enabling air to rise smoothly in a narrow cooling gap has an advantage a temperature rise can be suppressed by cooling the battery cells efficiently, while keeping the size of the battery system compact. In particular, the structure for partitioning the cooling gap into a plurality of cooling ducts is ideal for suppressing a temperature rise of the battery cells caused by each of the bus bar plates.

Even more favorably, the chimney effect works to further accelerate the speed at which the internal air rises as the temperature of the internal air becomes higher. Therefore, the structure in which the cooling gap is partitioned into the plurality of cooling ducts has an advantage in suppressing heating of the battery cells at the positions facing the respective bus bar plates by suppressing the temperature rises of the respective bus bar plates, in an ideal fashion. In the battery block, when the load current increases, both of the battery cells and the bus bar plates generate heat and the temperatures thereof rise due to the Joule heating. Therefore, it is extremely important to suppress the thermal energy of the heated bus bar plates that heat the battery cells. Because the battery cells disposed at the positions facing the bus bar plates themselves are already heated by the load current, if the battery cells are further heated by the heated bus bar plates, the rise of the temperature accelerates, and the temperature becomes extremely high. In battery systems, a temperature rise of a specific battery cell causes adverse effects in the electrical characteristics of the entire battery system. For example, a deterioration in a specific battery cell may shorten the lifetime of the entire battery system, or impose a limitation to the maximum load current of the battery system, for example.

Because the chimney effect of the cooling ducts permits the internal air to rise more quickly when the load current of the battery system increases, and the temperatures of both of the bus bar plates and battery cells increase, the thermal energy of bus bar plates that heat the battery cells can be suppressed effectively. Therefore, it is possible to achieve an ideal advantage in enabling suppression of a temperature rise of the battery cells caused by the bus bar plates, in an environment where the temperature of the battery cells becomes high.

Furthermore, the advantage described above, that is, the excellent heat insulation effect achieved by the chimney effect of the cooling ducts works particularly effectively in a battery system in which the total current of the plurality of battery cells flows through the bus bar plates, and in which the bus bar plates have a high thermal energy resultant of the Joule heating. This structure also provides an advantage that the temperature rise of the battery cells can be suppressed more effectively in the usage environment where the load current is high.

In a battery holder of a battery system according to another exemplary embodiment of the present invention, by providing a projecting spacer projecting toward a surface of the bus bar plate facing the projecting spacer, and keeping the projecting spacer in abutment against the bus bar plate, it is possible to keep the cooling gap to a certain size. This battery system provides an advantage that the projecting spacer can keep the cooling gap to a size where an excellent heat insulation effect is achieved.

In a battery system according to another exemplary embodiment of the present invention, the projecting spacer is positioned at a central part of the bus bar plate, so that a gap having an excellent heat insulation effect can be formed with the long and thin bus bar plates extending vertically.

In a battery system according to another exemplary embodiment of the present invention, the projecting spacer positioned at the central part of the bus bar plate is provided as a screw boss that is integrated with the battery holder, and a set screw penetrating the bus bar plate is screwed into the screw boss to fix the bus bar plate to the battery holder. This battery system has an advantage that, by screwing the set screw into the screw boss in a manner penetrating through the bus bar plate, the cooling gap can be kept to a certain size while keeping the bus bar plate fixed at the fixed position of the battery holder, because the projecting spacer for holding the cooling gap to a certain size is also used as a screw boss for fixing the bus bar plate to the battery holder.

In a battery system according to another exemplary embodiment of the present invention, the battery holder may be provided with the projecting spacer projecting linearly and extending vertically, and positioned on each of an upper part and a lower part on an inner side of the bus bar plates. This battery system has an advantage that the entire cooling gap provided to the inner surface of the long and thin bus bar plates can be kept to a certain size, with the bus bar plates being fixed to the battery holder. At the same time, the projecting spacer is provided with a shape projecting linearly and extending vertically so that the air inside the cooling gap is allowed to rise smoothly. Therefore, an excellent heat insulation effect can be achieved across the entire cooling gap.

In a battery system according to another exemplary embodiment of the present invention, each of the battery cells is configured as a cylindrical battery; the plurality of cylindrical batteries are disposed in a direction extending vertically; the cylindrical batteries have their end faces disposed on the top surface and the bottom surface of the battery block, respectively; and lead plates are enabled to connect the plurality of cylindrical batteries in parallel, by connecting the first lead plates to the upper face electrodes of the cylindrical batteries, and connecting the second lead plates to the bottom face electrodes of the cylindrical batteries.

### [First exemplary embodiment]

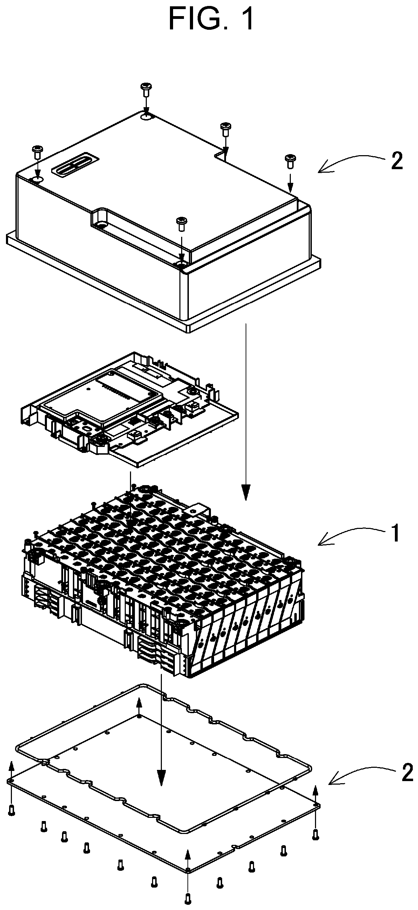

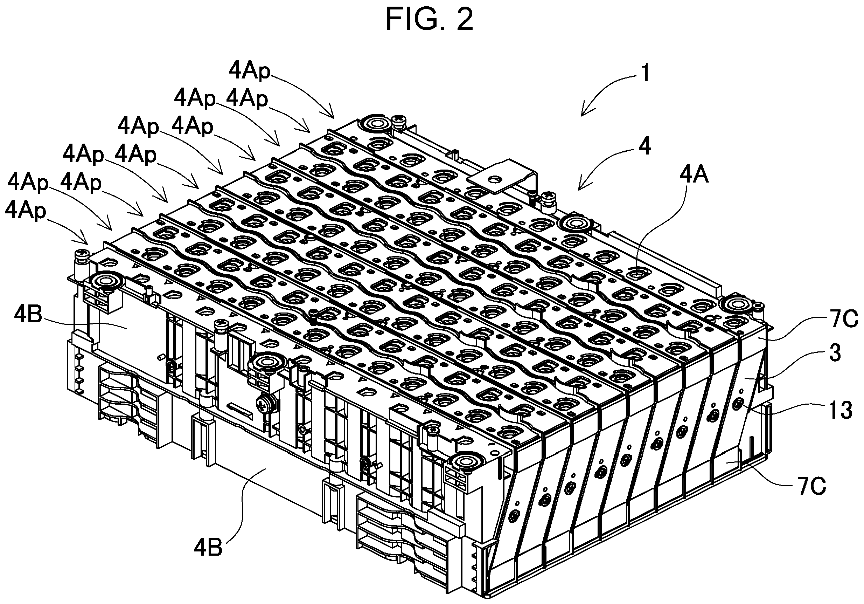

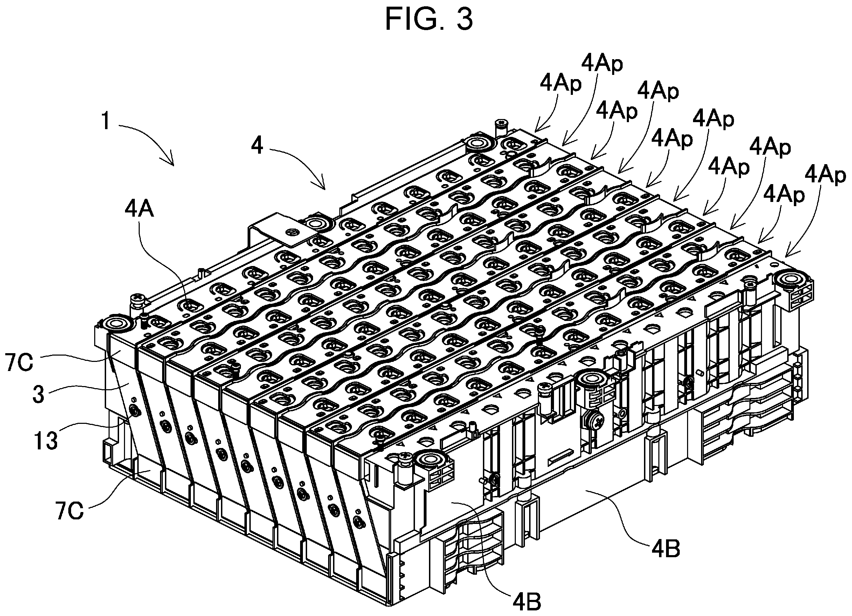

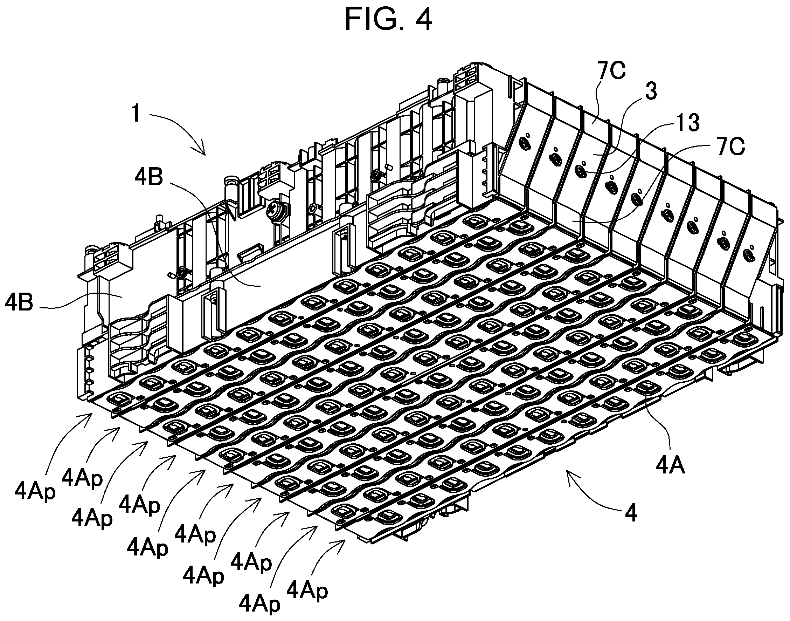

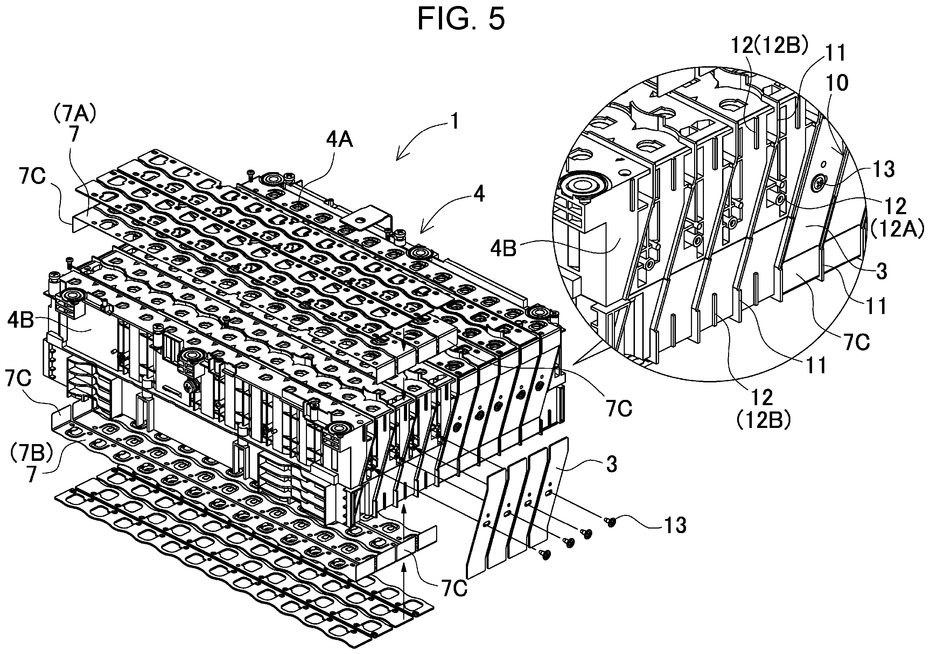

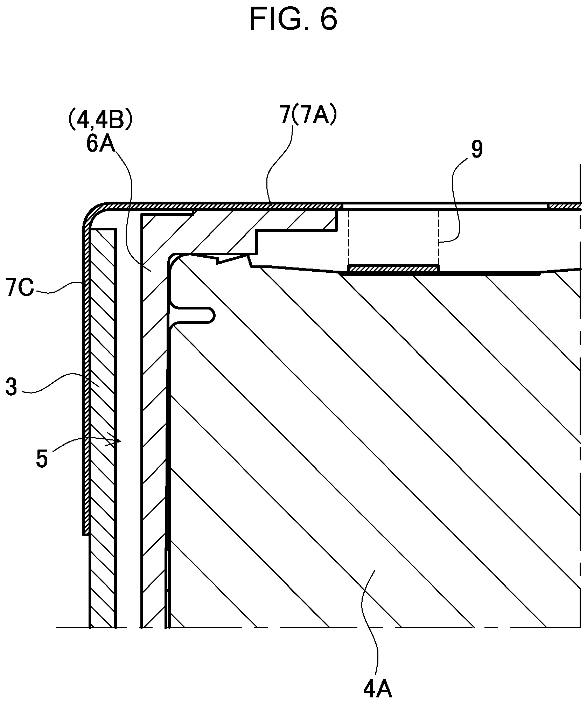

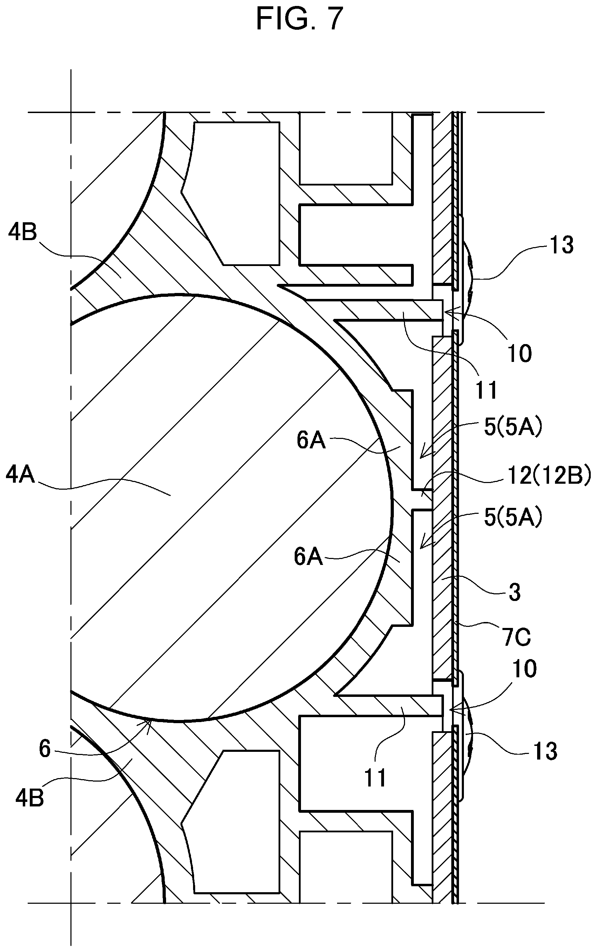

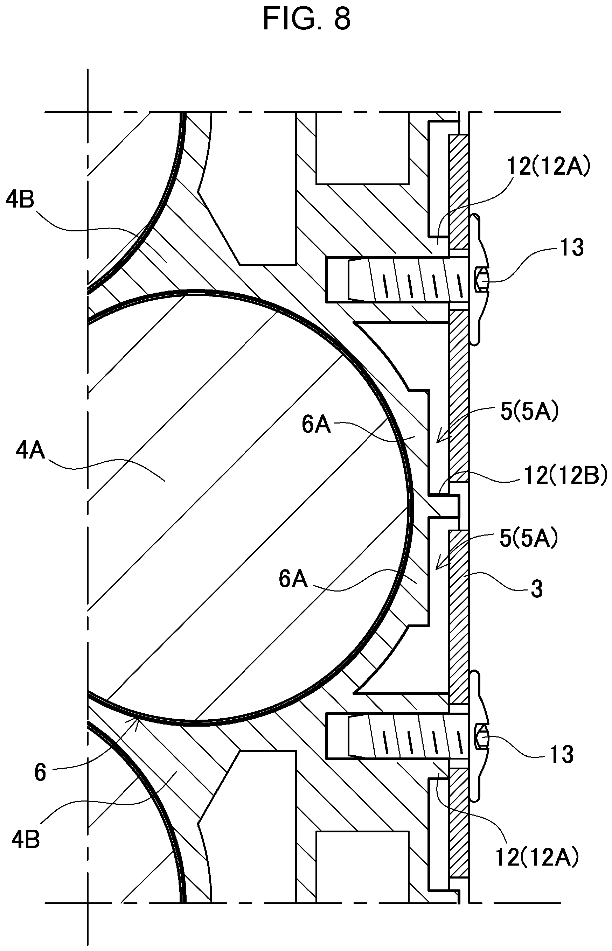

Fig. 1 is a perspective view of battery system 1 with outer covering case 2 separated. Figs. 2 and 3 are perspective views of battery system 1 as viewed from the opposite sides. Fig. 4 is a perspective view of battery system 1 as viewed from below. Fig. 5 is a perspective view illustrating battery system 1 with bus bar plates 3 separated. Fig. 6 is a vertical cross-sectional view illustrating cooling gap 5 between bus bar plates 3 and battery block 4. Figs. 7 and 8 are horizontal cross-sectional views of battery block 4, where Fig. 7 is a horizontal cross-sectional view of an upper part, and Fig. 8 is a horizontal cross-sectional view of a central part.

Battery system 1 illustrated in these drawings includes: battery block 4 including a plurality of battery cells 4A; a plurality of first lead plates 7A disposed on a top surface of battery block 4 and connected to end-face electrodes of battery cells 4A; and a plurality of second lead plates 7B disposed on a bottom surface of battery block 4 and connected to end-face electrodes of battery cells 4A; and a plurality of bus bar plates 3 having upper ends and lower ends electrically connected to first lead plates 7A and second lead plates 7B, respectively, and disposed vertically on a side surface of the battery block 4.

### (Battery block 4)

Battery block 4 illustrated in Figs. 1 to 4 has a substantially cuboid shape as a whole. A plurality of rows of first lead plates 7A are disposed in parallel with each other on the top surface of battery block 4, and a plurality of rows of second lead plates 7B are disposed in parallel with each other on the bottom surface of battery block 4. In battery block 4, all battery cells 4A are disposed in parallel with each other, and end-face electrodes are disposed on the same plane. In battery block 4, parallel block 4Ap is formed by connecting a plurality of rows of battery cells 4A that are arranged on the same plane, in parallel, using first lead plates 7A and second lead plates 7B. A plurality of parallel blocks 4Ap are then arranged in a plurality of rows, and adjacent parallel blocks 4Ap are connected in series using bus bar plates 3. In battery block 4 illustrated in Figs. 1 to 4, adjacent parallel blocks 4Ap are disposed near to each other by positioning battery cells 4A of one parallel block 4Ap in respective recesses between battery cells 4A of the other parallel block 4Ap. However, the layout in which the plurality of parallel blocks are arranged in a plurality of rows in the present invention is not limited to that illustrated in the drawings, and it is also possible for the battery cells to be arranged in a grid, in a manner not illustrated, for example.

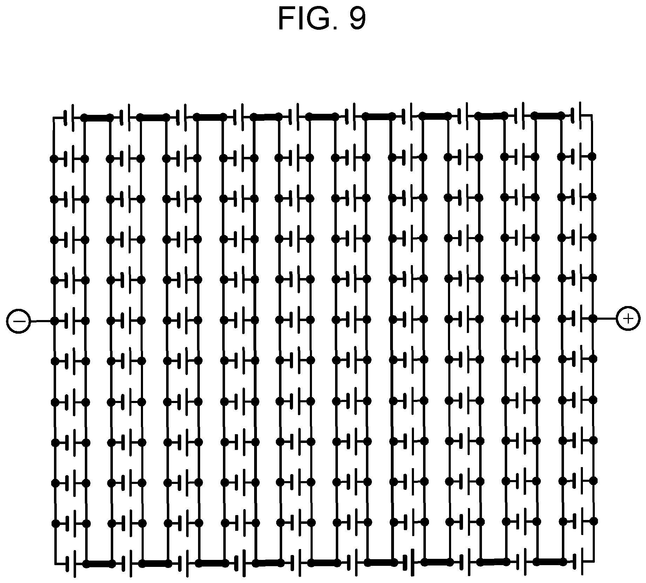

Fig. 9 is a circuit diagram illustrating battery cells 4A being connected by first lead plates 7A, second lead plates 7B, and bus bar plates 3. Because bus bar plates 3 illustrated in this diagram connect parallel blocks 4Ap in series, with each parallel block 4Ap including a plurality of battery cells 4A that are connected in parallel by first lead plate 7A and second lead plate 7B, the total current of the currents flowing through battery cells 4A included in parallel block 4Ap flows through bus bar plate 3. For example, assuming battery system 1 in which ten battery cells 4A are connected in parallel, the total current flowing through bus bar plate 3 is ten times the current of one battery cell 4A. In battery system 1 illustrated in the perspective views in Figs. 2 and 3, because pairs of bus bar plates 3 disposed on respective side surfaces of battery block 4 connect parallel blocks 4Ap in series, the current flowing through each bus bar plate 3 can be reduced to a half of the total current. However, it is also possible for battery system 1 to connect the battery blocks in series using bus bar plates disposed only on one side, the configuration of which is not illustrated, without connecting the parallel blocks using pairs of bus bar plates.

Battery block 4 includes battery holder 4B positioning battery cells 4A at fixed positions. Battery holder 4B is a molded product made of an insulating material such as plastic, and includes cylindrical receptacles 6 for inserting battery cells 4A and positioning each battery cell 4A at a fixed position. Furthermore, in battery holder 4B illustrated in the cross-sectional views of Figs. 7 and 8, a surface of cylindrical receptacles 6 facing bus bar plate 3 is formed as insulating cylindrical tube 6A, and cooling gap 5 is provided between insulating cylindrical tube 6A and bus bar plate 3.

### (First lead plate 7A and second lead plate 7B)

In battery system 1 illustrated in Figs. 1 to 4, first lead plate 7A is electrically connected to the upper face electrodes of battery cells 4A, with the upper face electrodes being disposed on the top surface of battery block 4, and second lead plate 7B is electrically connected to the bottom end-face electrodes on the bottom ends of battery cells 4A, with the bottom end-face electrodes being disposed on the bottom surface of battery block 4. Each of first lead plate 7A and second lead plate 7B has connection arm 9 (Fig. 6) that is to be electrically connected to an end-face electrode of battery cell 4A, using a method such as spot welding or laser welding. Connection arm 9 has a welded area projecting toward the end-face electrode, and therefore can be welded reliably to the end-face electrode. Each of first lead plate 7A and second lead plate 7B is a conductive metal plate such as an aluminum plate, a nickel plate, and a copper plate, and is provided with connection arm 9 at a position facing the end-face electrode of battery cell 4A. Connection arm 9 projecting toward and abutting against the surface of the end-face electrode is welded and electrically connected securely to the end-face electrode using a method such as spot welding or laser welding. Each of first lead plate 7A and second lead plate 7B has bent connection part 7C that is bent by 90 degrees on each end. In this manner, first lead plate 7A and second lead plate 7B can be easily connected to bus bar plates 3.

First lead plate 7A and second lead plate 7B each have a long, thin, plate-like shape extending along the top surface and the bottom surface of the parallel block 4Ap, respectively, in which the plurality of battery cells 4A are arranged in a row, and are provided with connection arms 9 at positions facing the end-face electrodes of the respective battery cells 4A. With connection arms 9 connected to the respective end-face electrodes of battery cells 4A, first lead plate 7A and second lead plate 7B connect battery cells 4A, which are to form parallel block 4Ap, in parallel. In battery block 4, because the plurality of parallel blocks 4Ap are arranged in a plurality of rows, a plurality of rows of first lead plates 7A are arranged in parallel on the top surface of battery block 4, and a plurality of rows of second lead plates 7B are arranged in parallel on the bottom surface of battery block 4, to connect battery cells 4A inside parallel blocks 4Ap in parallel. In battery block 4 illustrated in the drawing, the plurality of battery cells 4A are arranged in a row, to form one parallel block 4Ap. However, the battery block may include a plurality of battery cells arranged in a plurality of rows, in a manner not illustrated, to form one parallel block.

Because the plurality of rows of parallel blocks 4Ap are connected in series by bus bar plates 3, there is a potential difference between adjacent lead plates. Accordingly, an insulating gap is ensured between adjacent lead plates 7 disposed in parallel with each other. Each lead plate 7 has such a lateral width by which insulating gap 10 is formed between adjacent lead plates 4 in a configuration in which lead plates 7 are connected to the end-face electrodes of battery cells 4A in parallel block 4Ap. Being connected to the end-face electrodes of battery cells 4A and being disposed at fixed positions, first lead plates 7A and second lead plates 7B form insulating gap 10 with the lead plate adjacent thereto.

Each end of first lead plate 7A and second lead plate 7B is provided with bent connection part 7C, so that first lead plate 7A and second lead plate 7B can be connected to bus bar plate 3 simply, easily, and reliably. Because first lead plate 7A and second lead plate 7B are disposed on the top surface and the bottom surface of battery block 4, respectively, and bent connection parts 7C extend vertically, bent connection parts 7C can be connected to bus bar plates 3 by bringing bent connection parts 7C into surface contact with an upper-end connection part and a bottom-end connection part of bus bar plate 3, respectively.

### (Bus bar plates 3)

Bus bar plates 3 have their upper end and lower ends connected to first lead plates 7A and second lead plates 7B, respectively, to connect the plurality of parallel blocks 4Ap in series. Bus bar plate 3 is a thin and long conductive metal plate such as an aluminum plate, a nickel plate, or a copper plate, and is connected to first lead plate 7A and second lead plate 7B via connection leads. Because the total current of parallel block 4Ap flows through bus bar plate 3, a metal plate having a maximum current capacity higher than or equal to the total current of the parallel block 4Ap is used as bus bar plate 3. Because bus bar plate 3 is made of the same metal material as the lead plate, the thickness of bus bar plate 3 is set greater than that of the lead plate, so that bus bar plate 3 has a lower electric resistance than that of the lead plate. In battery system 1, bus bar plates 3 are disposed in parallel, on the side surfaces of battery block 4, and connect first lead plates 7A and second lead plates 7B in series. In battery system 1 illustrated in the circuit diagram in Fig. 9, a pair of bus bar plates 3 is used in connecting the ends of first lead plate 7A and second lead plate 7B in series. As illustrated in Figs. 2 and 3, in battery system 1, bus bar plates 3 are disposed as pairs on the respective side surfaces of battery block 4, and each of such bus bar plates 3 connects first lead plate 7A and second lead plate 7B in series. Bus bar plate 3 connects the plurality of rows of adjacent parallel blocks 4Ap in series by having the upper end connected to the lead plate on parallel block 4Ap, and having the lower end connected to the lead plate on adjacent parallel block 4Ap. In bus bar plate 3 illustrated in the drawings mentioned above, the upper-end connection part and the bottom-end connection part of bus bar plate 3 extend vertically, and a part between the upper-end connection part and the lower-end connection part extend diagonally. In this manner, the upper-end connection part is connected to first lead plate 7A of one parallel block 4Ap, and the lower-end connection part is connected to second lead plate 7B of parallel block 4Ap adjacent thereto.

Bus bar plates 3 illustrated in Fig. 5 connect parallel blocks 4Ap in series, with cooling gap 5 ensured between bus bar plates 3 and battery block 4. Because adjacent bus bar plates 3 has a potential difference, by arranging a plurality of rows of bus bar plates 3 on the same plane in parallel, by providing insulating gap 10 between adjacent bus bar plates 3, and by providing insulating linear projection 11 in insulating gap 10, adjacent bus bar plates 3 are insulated from each other by insulating linear projection 11. Insulating linear projection 11 is integrally molded with battery holder 4B, which is a plastic molded product made of an insulating material, so as to be provided at a fixed position, and is disposed in insulating gap 10 between adjacent bus bar plates 3. Insulating linear projection 11 is a linear projection extending vertically along insulating gap 10 between adjacent bus bar plates 3, and preferably has such a height that the insulating linear projection 11 juts out from insulating gap 10 to the surface of bus bar plate 3 so that bus bar plates 3 can be insulated reliably. In addition to the function of insulating adjacent bus bar plates 3, insulating linear projection 11 also serves as a partitioning wall that partitions cooling gap 5 on the inner side of bus bar plates 3, into cooling ducts 5A having a predetermined lateral width.

Battery holder 4B provides insulating gap 10 between adjacent first lead plates 7A and second lead plates 7B, and has a structure integrated with insulating linear projection 11 projecting into this insulating gap 10. Similarly to insulating linear projections 11 for insulating bus bar plates 3, insulating linear projections 11 are disposed in the gap between the adjacent lead plates, and insulate the adjacent lead plates.

### (Cooling gap 5)

Battery system 1 illustrated in Figs. 6 to 8 is provided with cooling gap 5 for suppressing a temperature rise of battery cells 4A caused by heated bus bar plates 3. Cooling gap 5 is provided between each of bus bar plates 3 that are arranged in a plurality of rows, and battery block 4. Cooling gap 5 is a space extending vertically and positioned between the plurality of rows of bus bar plates 3 and battery block 4, and achieves an excellent heat insulation effect by causing the internal air to rise using the chimney effect. When the internal air in cooling gap 5 rises, the risen internal air is exhausted through the gap above cooling gap 5, and low-temperature air flows into cooling gap 5 through the gap below cooling gap 5, and improves the heat insulation effect of cooling gap 5. Because cooling gap 5 is formed by positioning the plurality of rows of bus bar plates 3 in a manner spaced apart from the side surface of battery block 4, there is a gap for allowing ventilation of the internal air, above and below cooling gap 5, unless a completely airtight structure is formed using a packing or a gasket. Therefore, cooling gap 5 is a space closed but not tightly sealed.

The chimney effect is an effect by which the high-temperature internal air inside a chimney is exhausted quickly, and is an effect reducing the specific gravity of the high-temperature air inside a chimney extending vertically, and allowing the high-temperature internal air to rise and to be exhausted quickly. Chimneys are designed to use this effect to quickly exhaust high-temperature internal air. Because the chimney effect enables high-temperature air inside a limited space extending vertically such as a chimney to be exhausted quickly, a better heat insulation effect can be achieved by allowing the internal air to rise quickly, while keeping the size of cooling gap 5 small. It is therefore possible to improve the heat insulation effect by causing bus bar plates 3 to heat the internal air and by causing the air to rise quickly, while ensuring narrow cooling gap 5, e.g., 1 mm to 5 mm between bus bar plates 3 and battery block 4.

More advantageously, cooling gap 5, which improves the heat insulation effect by the chimney effect, also has an excellent feature for improving the heat insulation effect by enabling the internal air to rise even more quickly as the temperature of bus bar plate 3 rises more. The condition where an excellent heat resistance characteristic of cooling gap 5 is required is a condition in which the load current of battery system 1 increases and the temperatures of both bus bar plate 3 and battery cells 4A rise extensively. In battery system 1, the temperatures of bus bar plates 3 and battery cells 4A rise more as the load current increases. This is because heat is generated by the Joule heating of the current flowing through bus bar plates 3 and the battery cells 4A. In other words, in battery system 1, cooling gap 5 is demanded to exert an excellent heat resistance characteristic when the load current increases and the temperatures of bus bar plates 3 and battery cells 4A both rise. While being capable of improving the heat insulation effect by causing internal air to rise quickly with the chimney effect, cooling gap 5 implements an ideal characteristic of enabling the air on the inner side of bus bar plates 3 to rise even more quickly and of achieving an even better heat insulation effect when the temperature of bus bar plates 3 becomes even higher. Furthermore, more favorably, because cooling gap 5 enables the internal air to rise quickly with a narrow space, cooling gap 5 also achieves an advantage in suppressing a temperature rise of battery cells 4A effectively while keeping an increase in the outer size of battery system 1 very small.

In battery system 1 illustrated in Fig. 5, insulating gap 10 is provided between the plurality of bus bar plates 3 disposed on the same plane, and insulating linear projection 11 having a structure integrated with battery holder 4B is disposed in insulating gap 10. Insulating linear projection 11 not only provides insulation between adjacent bus bar plates 3, but also serves as a partitioning wall that partitions cooling gap 5 into a plurality of rows of cooling ducts 5A extending vertically. Cooling gap 5 partitioned into the plurality of cooling ducts 5A exerts a better heat insulation effect by enabling the internal air to rise more efficiently with the chimney effect of each cooling duct 5A. With the chimney effect of the cooling ducts 5A, the internal air in a limited space that is not too spacious rises quickly. Therefore, by providing narrow cooling gap 5 between bus bar plates 3 and battery block 4, and further partitioning cooling gap 5 into the plurality of cooling ducts 5A, a better heat insulation effect can be achieved by enabling the internal air inside cooling gap 5 to rise quickly. Because the air can rise smoothly in the narrow cooling gap 5 and cool the battery cells 4A efficiently, battery cells 4A can be cooled efficiently while keeping battery system 1 compact. Furthermore, with insulating linear projections 11 for insulating bus bar plates 3 provided, although the internal volume of cooling gap 5 becomes slightly smaller, cooling gap 5 achieves an excellent heat insulation effect. Therefore, it is possible to suppress a temperature rise of the battery cells 4A caused by heated bus bar plates 3, in an ideal fashion.

Fig. 7 illustrates a horizontal cross section of the upper part of battery block 4. Battery system 1 has a slit-like ventilation gap ensured between each side edge of bus bar plate 3 and insulating linear projection 11. A slit-like ventilation gap, not illustrated, is also provided in the lower part of bus bar plate 3, between each side edge of bus bar plate 3 and insulating linear projection 11. Through the slit-like ventilation gap above cooling duct 5A, the risen air is exhausted to the outside; and through the slit-like ventilation gap below cooling duct 5A, the outside air not having been heated yet flows into the cooling duct 5A. A slit-like ventilation gap is also provided between each side edge of first and second lead plates 7A, 7B and insulating linear projection 11, as described above, and the air inside the cooling duct 5A is also ventilated through these gaps.

Favorably, the chimney effect works to accelerate the speed at which the internal air rises as the internal air temperature rises. Therefore, the structure in which cooling gap 5 is partitioned into the plurality of cooling ducts 5A has an advantage in suppressing heating of battery cells 4A at positions facing respective bus bar plates 3, as a result of a temperature rise of bus bar plates 3, in an ideal fashion. When the load current increases, the temperature of battery block 4 rises because both battery cells 4A and bus bar plates 3 generate heat by the Joule heating. Therefore, it is extremely important to minimize the thermal energy by which heated bus bar plates 3 heat battery cells 4A. Because battery cells 4A disposed at the positions facing bus bar plates 3 themselves are already being heated by the load current, if battery cells 4A are further heated by heated bus bar plates 3, the rise of the temperature accelerates, and the temperature becomes extremely high. In battery system 1, a temperature rise of specific battery cell 4A causes adverse effects in the electrical characteristics of entire battery system 1. For example, a deterioration in specific battery cell 4A may shorten the lifetime of entire battery system 1, or impose a limitation to the maximum load current of battery system 1.

Because the chimney effect of cooling ducts 5A permits the internal air to rise more quickly when the load current of battery system 1 increases, and the temperatures of both of bus bar plates 3 and battery cells 4A increase, the thermal energy of bus bar plates 3 that heat battery cells 4A can be suppressed effectively. Therefore, it is possible to achieve an ideal advantage in enabling suppression of a temperature rise of battery cells 4A caused by bus bar plates 3 in an environment where the temperature of battery cells 4A becomes high.

Furthermore, the advantage described above, that is, the excellent heat insulation effect achieved by the chimney effect of cooling duct 5A works particularly effectively in battery system 1 in which the total current of a plurality of battery cells 4A flows through bus bar plates 3, and in which bus bar plates 3 have a high thermal energy resultant of the Joule heating. This structure also provides an advantage that the temperature rise of battery cells 4A can be suppressed more effectively in the usage environment where the load current is high.

Furthermore, in battery system 1 illustrated in the horizontal cross-sectional views of Figs. 7 and 8, by disposing insulating cylindrical tube 6A of battery holder 4B between cooling gap 5 and battery cell 4A, the temperature rise of battery cells 4A caused by bus bar plate 3 is suppressed more effectively. Battery holder 4B can prevent an adverse effect of a temperature rise of battery cells 4A caused by the radiant heat of bus bar plates 3, and suppress a temperature rise of battery cells 4A. More preferably, because the surface of battery holder 4B facing bus bar plates 3 is irradiated with the radiant heat of bus bar plate 3, the temperature of the surface of battery holder 4B facing bus bar plates 3 irradiated with the radiant heat rises, and this temperature rise promotes rising of the internal air, and improves the heat insulation effect of cooling gap 5 achieved by the chimney effect. The structure suppressing a temperature rise of battery cells 4A using a two-layer heat insulating structure of cooling gap 5 and battery holder 4B achieves an advantage that the substantial heat insulation effect between bus bar plate 3 and battery cells 4A can be further improved not only by preventing the adverse effect of the radiant heat of bus bar plate 3 not raising the temperature of battery cells 4A but also by suppressing a temperature rise of battery cells 4A, and by increasing the temperature of the facing surface of battery holder 4B by the radiant heat. In this manner, battery system 1 described above is advantageous in that the temperature rise of battery cell 4A can be suppressed more effectively, with a synergistic effect of cooling gap 5 and battery holder 4B.

Battery holder 4B illustrated in the perspective view in Fig. 5 and the horizontal cross-sectional view in Fig. 8 is provided with projecting spacers 12 projecting toward the surface facing bus bar plates 3, to keep cooling gap 5 to a certain size. Cooling gap 5 is kept in a certain size by bringing bus bar plates 3 into abutment against projecting spacers 12. In battery system 1 illustrated in Fig. 5, projecting spacer 12 is positioned at a central part of bus bar plate 3, so that cooling gap 5 having a certain size is formed on the inner side of long and thin bus bar plates 3. Furthermore, in battery system 1 illustrated in this drawing, projecting spacer 12 is provided as screw boss 12A having a structure integrated with battery holder 4B, and bus bar plate 3 is fixed by set screw 13. Set screw 13 penetrates through bus bar plate 3, and is screwed into screw boss 12A, to fix bus bar plate 3 onto the screw boss 12A of projecting spacer 12. In this structure, because projecting spacer 12 for keeping cooling gap 5 in a certain size is provided as screw boss 12A by which bus bar plate 3 is fixed, it is possible to provide cooling gap 5 having a certain size on the inner surface of bus bar plates 3, and to fix bus bar plates 3 reliably to battery holder 4B. Battery holder 4B illustrated in Fig. 5 is also provided with projecting spacer 12 having a shape of linear projection 12B extending vertically, and positioned on each of the upper part and the lower part on the inner side of inside bus bar plate 3.

In battery system 1 described above, cooling gap 5 having a high heat insulation effect may be provided at regular intervals, on the inner side of the entire long and thin bus bar plate 3 that is fixed to battery holder 4B by set screw 13 screwed into screw boss 12A. Furthermore, because projecting spacers 12 disposed on the upper and lower parts of bus bar plate 3 are formed as linear projections 12B extending vertically, there is an advantage that the air rises smoothly along projecting spacers 12, without projecting spacers 12 obstructing the rising of the air, and an excellent heat insulation effect can be achieved across entire cooling gap 5.

### INDUSTRIAL APPLICABILITY

The present invention can be applied effectively to a battery system for reducing the temperature difference between a plurality of battery cells, and a product provided with such a battery system.

### REFERENCE MARKS IN THE DRAWINGS

- 1: battery system
- 2: outer covering case
- 3: bus bar plate
- 4: battery block
- 4A: battery cell
- 4B: battery holder
- 4Ap: parallel block
- 5: cooling gap
- 5A: cooling duct
- 6: cylindrical receptacle
- 6A: insulating cylindrical tube
- 7: lead plate
- 7A: first lead plate
- 7B: second lead plate
- 7C: bent connection part
- 9: connection arm
- 10: insulating gap
- 11: insulating linear projection
- 12: projecting spacer
- 12A: screw boss
- 12B: linear projection
- 13: set screw
- 901: battery system
- 903: bus bar plate
- 904A: battery cell
- 904Ap: parallel block

## Claims

1. A battery system comprising:
a battery block including a plurality of battery cells;
a plurality of first lead plates disposed on a top surface of the battery block and connected to end-face electrodes of the battery cells;
a plurality of second lead plates disposed on a bottom surface of the battery block and connected the battery cells to end-face electrodes; and
a plurality of bus bar plates including upper ends and lower ends electrically connected to the first lead plates and the second lead plates, respectively, and disposed vertically on a side surface of the battery block, wherein
the bus bar plates and the battery block define a cooling gap extending vertically and ventilating air, between the bus bar plates and the battery block.

2. The battery system according to Claim 1, wherein
the battery block includes a plurality of parallel blocks each including corresponding battery cells that are connected in parallel by a corresponding one of the first lead plates and a corresponding one of the second lead plates, the corresponding battery cells being included in the plurality of battery cells, and
the bus bar plates connect the parallel blocks in series.

3. The battery system according to Claim 1, wherein
the battery block includes a battery holder where the plurality of battery cells are arranged at fixed positions, and
the battery holder and the plurality of bus bar plates define the cooling gap between the battery holder and the plurality of bus bar plates.

4. The battery system according to Claim 3, wherein
the plurality of bus bar plates are arranged in parallel on a same plane,
among the plurality of bus bar plates, adjacent bus bar plates define an insulating gap between the adjacent bus bar plates,
in the insulating gap, an insulating linear projection integrated with the battery holder is disposed, and
the insulating linear projection partitions the cooling gap into a plurality of rows of cooling ducts that extend vertically.

5. The battery system according to Claim 3, wherein
the battery holder includes a projecting spacer projecting toward a surface of a bus bar plate that faces the projecting spacer, among the plurality of bus bar plates,
the projecting spacer keeps the cooling gap to a certain size, by coming into abutment against the bus bar plate.

6. The battery system according to Claim 5, wherein the projecting spacer is positioned at a central part of the bus bar plate.

7. The battery system according to Claim 6, wherein
the projecting spacer positioned at the central part of the bus bar plate is a screw boss including a structure integrated with the battery holder,
a set screw penetrating the bus bar plate is screwed into the screw boss, and
the bus bar plate is thus fixed to the battery holder.

8. The battery system according to Claim 5, wherein the battery holder includes the projecting spacer that projects linearly and extends vertically, on each of an upper part and a lower part on an inner side of the bus bar plate.

9. The battery system according to any one of Claims 1 to 8, wherein
each of the battery cells is a cylindrical battery, and
in the battery block,
the plurality of battery cells are disposed in a direction extending vertically,
the battery cells include end faces disposed on the top surface and the bottom surface of the battery block, respectively,
the first lead plates connect upper face electrodes of the battery cells,
the second lead plates connect to bottom face electrodes of the battery cells, and
the lead plates connect the plurality of the battery cells in parallel.
